Europäisches Patentamt

European Patent Office

Office européen des brevets

(11) Publication number: **0 213 334 B1**

# EUROPEAN PATENT SPECIFICATION

(45) Date of publication of patent specification: **25.03.92**  (51) Int. Cl.5: **B23C 5/10**

(21) Application number: **86109448.0**

(22) Date of filing: **10.07.86**

(54) **Cermet solid end mill.**

(30) Priority: **30.08.85 JP 192257/85**
**28.02.86 JP 44355/86**

(43) Date of publication of application:
**11.03.87 Bulletin  87/11**

(45) Publication of the grant of the patent:
**25.03.92 Bulletin  92/13**

(84) Designated Contracting States:
**DE FR GB**

(56) References cited:
**DE-A- 2 235 690**

**PATENT ABSTRACTS OF JAPAN, vol. 9, no.
152 (M-391)[1875], 27th June 1985; & JP-A-60
29 203 (HITACHI CHIYOUKOU K.K.) 14-02-1985**

**THE ENGINEERS' DIGEST, vol. 20, no. 3,
March 1959, page 109; O.YA. KONSTAN-
TINOV: "High-productivity milling cutters"**

**THE IRON AGE, 17th November 1966, page
152; "Carbide end mills for N/C machining"**

(73) Proprietor: **KYOCERA CORPORATION
5-22, Kita Inoue-cho Higashino
Yamashina-ku Kyoto-shi(JP)**

Proprietor: **HITACHI TOOL ENGINEERING, LTD.
13-20, Nonakakita 1-chome Yodogawa-ku
Osaka-shi(JP)**

(72) Inventor: **Nishi, Masami Kyocera Corporation
Fushimi Office
11-17, Kugahonmachi Fushimi-ku
Kyoto-shi(JP)**
Inventor: **Kishimoto, Kiyoshi c/o Nippon Tool
Works Ltd.
13-20, Nonakakita 1-chome Yodogawa-ku
Osaka-shi(JP)**
Inventor: **Matsumoto, Haruo c/o Nippon Tool
Works Ltd.
13-20, Nonakakita 1-chome Yodogawa-ku
Osaka-shi(JP)**

(74) Representative: **Sajda, Wolf E., Dipl.-Phys. et
al
MEISSNER, BOLTE & PARTNER Widenmayer-
strasse 48 Postfach 86 06 24
W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a solid end mill made of a cermet material, comprising TiC, TiN, NbC, WC and a bonding phase of ferrous group metals.

Such a solid end mill is of the type to be used for machine tools, such as milling machines.

An end mill is a cutting tool with a relatively small diameter and is used for cutting at middle and high speeds. Therefore, it must have high hardness and toughness. Furthermore, since workpieces made of hard-to-cut materials having high hardness are frequently used in these days, the end mill must have a higher hardness. A conventional end mill made of high-speed steel is low in wear resistance although it is high in toughness. The wear resistance of the end mill made of cemented carbide (alloy) is higher than that of the end mill made of high-speed steel, but not sufficient in practice. Accordingly, these conventional end mills are not suitable to cut workpieces made of hard materials at middle and high speeds. Cermet materials, which have the same values in toughness and wear resistance as cemented carbide are more suitable for an end mill material because of their physical properties than high speed steel and cemented carbide. However, in conventional technology, cermet has only been used as a throw-away chip for an assembly end mill having a large diameter, and it was difficult to make an end mill having high helix cutting edges.

Therefore, cermet end mills made by conventional technology were not well suitable for milling and caused problems concerning cutting edge chipping or breakage.

A solid end mill as mentioned above is known from Patent Abstracts of Japan, Vol. 9, No. 152 (M-391) (1875), 27th June 1985 and JP-A-60-29203. In this prior art end mill, the WC component has a very high content, namely a minimum content of 56 % by weight WC and a maximum content of 81 % by weight depending on the respective composition of the hard phase of the specified components. In terms of the Japanese Industrial Standard (JIS) B 4053 such materials are considered as hard metal material.

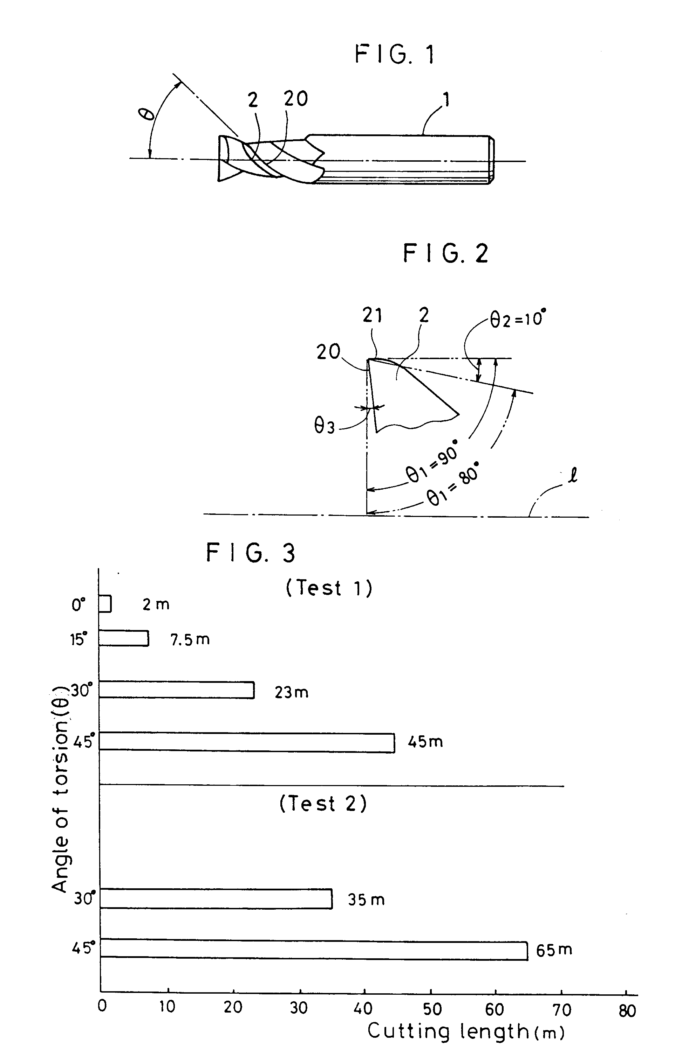

The publication "The Engineers' Digest, Vol. 20, No. 3, March 1959; O. Konstantinov "High-Productivity milling cutters", page 109, Figs. 1 and 3" discloses milling cutters which are characterized by a smaller number of teeth, an enlarged flute area and steeper helix angles. In this connection, some helix angles are mentioned having values of 35° to 45°. As explained in this document, it is the flute conture combined with the relatively steep helix angle which are used in order to facilitate chip removal and to eliminate clogging entirely. However, nothing can be found in this document as to the composition of the material to be used for a solid end mill. On the other hand, the first document is not concerned with any details as to specific helix angles.

The object underlying the present invention is to provide for an end mill having a high strength, resistance and lifetime.

This object is solved according to the invention in that a solid end mill as specified above is characterized in that the helix angle of a cutting edge with respect to the axis of a tool is in the range of 40° to 50°, and in that the cermet material is composed essentially of a 10 to 50 % by weight NbC - 10 to 40 % by weight TiC - 5 to 10 % by weight TiN - based cermet composition of matter which has a WC content of 10 to 25 % by weight.

According to a further development of the solid end mill according to the invention, the helix angle is 45° + 2° and the cermet composition includes a NbC-TiC-TiN-WC-$Mo_2$C-based hard material phase and a metal phase comprising Ni or Co or an alloy of Ni and Co.

According to a further aspect of the solid end mill according to the invention the cermet composition comprises 5 to 20 % by weight $Mo_2$C as a hard material phase.

A specific embodiment of the solid end mill according to the present invention is characterized in that the cermet composition is composed essentially of a hard material phase of 50 % by weight NbC, 10 % by weight TiC, 5 % by weight TiN, 10 % by weight WC and 5 % by weight $Mo_2$C.

Another specific embodiment of the solid end mill according to the invention is characterized in that the cermet composition is composed essentially of a hard material phase of 30 % by weight NbC, 20 % by weight TiC, 5 % by weight TiN, 15 % by weight WC and 15 % by weight $Mo_2$C.

According to a further development of the solid end mill according to the present invention, a part of NbC is replaced by TaC. In a specific embodiment, half of the amount of NbC is replaced by TaC.

According to a further aspect of the solid end mill according to the present invention, a circular land section is provided at the end of the end mill in order to increase the cutting angle. In a specific embodiment, this cutting angle is approximately 90°.

According to the present invention, the inventors have considerably improved the performance and the application range of the solid end mill in question. On the one hand, it was possible to improve the strength of the solid end mill, on the other hand, high wear resistance could be maintained. So, the tool life of the solid end mill could be made longer than that of a conventional end mill made of cemented carbide. Moreover, the toughness of the solid end mill could be improved according to the present invention.

Further details and advantages of the invention will be explained below with reference to preferred embodiments and the accompanying drawings, wherein

Fig. 1 is a side view of a first embodiment of the end mill according to present invention;

Fig. 2 is an enlarged view of the cutting edge section of the end mill;

and Fig. 3 is a graph indicating the relationship between the helix angle and the cutting length of a second embodiment of the present invention.

## DETAILED DESCRIPTION OF THE PREFERRED EMBODIMENTS

Fig. 1 is a side view of the end mill of the present invention having two cutting edges. Numeral 1 designates a shank and numeral 2 designates a cutting edge. A helix angle $\theta$ designates the angle of intersection between the axial line of the shank and a cutting edge 20 and is set in a range of 40 to 50 degrees in the present invention. In the case of ordinary end mills made of high-speed steel or cemented carbide, the helix angle $\theta$ is set in a range of 15 to 60 degrees (normally 25 to 35 degrees). As the angle $\theta$ decreases, the resistance against intermittent cutting increases, causing chipping and breakage. As the angle increases, the length of the cutting edge is longer and the cutting resistance does not change greatly. However, the edge becomes sharper and is apt to be broken.

In the present invention, the angle $\theta$ is set to a relatively large value in a range of 40 to 50 degrees. By improving the toughness of the cermet composition, no problem occurs even when the angle is set at a relatively large value. Thus the end mill of the present invention can have longer cutting length and duration as confirmed by the test results described below. In addition, no chipping or breakage is caused, thus the end mill can have a far longer tool life.

The most preferable value of the angle is 45 ± 2 degrees. Considering the practical cutting characteristics of an end mill, the angle should be in a range of 40 to 50 degrees, although there is no abrupt change in the cutting performance at the border angles of 40 and 50 degrees when the angle exceeds 50 degrees or decreases below 40 degrees. However, if the angle exceeds 50 degrees, the end mill has a less sectional area and is likely to be deformed by bending force. Accordingly, the end mill is apt to come off from the machine. On the contrary, if the angle is less than 40 degrees, the end mill is apt to be chipped or broken.

To prevent chipping and breakage, a preferred embodiment of the present invention has a very specific structure of each cutting edge 2 as shown in Fig. 2. More particularly, a circular land section 21 is formed at the end of the cutting edge 2 so that the cutting angle $\theta_1$ has a larger value. For example, when the circular land section 21 is formed so that the angle $\theta_1$ is 90 degrees when a rake angle $\theta_3$ is zero, the cutting angle $\theta_1$ is large and chipping hardly occurs. Without such a circular land section 21, the cutting angle $\theta_1$ is reduced by the rake angle $\theta_3$, thus the cutting angle $\theta_1$ becomes approximately 80 degrees. This may be apt to cause chipping. It is understood that the effect of the circular land section 21 is more significant as the rake angle $\theta_3$ is larger and the cutting angle $\theta_1$ is smaller. The center of curvature of the circular land section 21 is on the axial line 1 of the shank 1.

The cermet composition of the present invention will be explained below.

The cermet composition of the invention characteristically includes NbC. More particularly, the cermet is composed essentially of NbC (10 to 50 %), TiC (10 to 40 %), TiN (5 to 10 %), WC (10 to 25 %) and $Mo_2C$ (5 to 20 %). (These and the following percentages are all percent by weight values.) An embodiment of the present invention has a hard material phase comprising NbC (50%), TiC (10%), TiN (5%), WC (10%) and $Mo_2C$ (5%), and a metal phase comprising Ni or Co or an alloy of Ni and Co. A part of NbC can be replaced with TaC to further improve the toughness of the embodiment. The cermet composition whose hard material phase mainly composed of NbC is equal or superior to the conventional WC-based cemented carbide in resistance against wear and intermittent cutting. In addition, the toughness of the cermet composition is higher than that of the TiC-TiN-based cermet. Table 1 below shows the physical properties of the cermet composition embodiments of the present invention compared with contrast examples.

## (a) Physical Properties

### Table 1

| Physical properties | Unit | Contrast example 1 | Contrast example 2 | Embodiment 1 | Embodiment 2 |
|---|---|---|---|---|---|
| Apparent specific gravity | - | 14,0 | 6,0 | 7,7 | 8,1 |
| Vickers hardness | $N/m^2 (x\ 10^9)$ | 15,20 | 16,18 | 14,22 | 14,71 |
|  | $(kg/mm^2)$ | (1550) | (1650) | (1450) | (1500) |
| Rockwell hardness | $N/m^2 (x\ 10^9)$ | 0,9061 | 0,9071 | 0,8973 | 0,9022 |
|  | $(kg/mm^2)$ | (92,4) | (92,5) | (91,5) | (92) |
| Bending strength | $N/m^2 (x\ 10^9)$ | 1,765 | 1,569 | 1,863 | 1,667 |
|  | $(kg/mm^2)$ | (180) | (160) | (190) | (170) |
| Young's modulus | $N/m^2 (x\ 10^{10})$ | 62,76 | 43,15 | 41,19 | 42,17 |
|  | $(kg/cm^2 (x\ 10^6))$ | (6,4) | (4,4) | (4,2) | (4,3) |
| Coefficient of linear expansion (40-400°C) | $1/°C (x\ 10^6)$ | 7,4 | - | 7,8 | 7,90 |
| (40-800°C) |  | - | 8,5 | - | 8,70 |
| Heat transfer rate | $J/cm \cdot s \cdot °C$ | 1,088 | 0,125 | 0,125 | 0,084 |
|  | $(cal \cdot cm/cm^2 sec \cdot °C)$ | (0,26) | (0,03) | (0,03) | (0,02) |
| Fracture toughness | $MN/m^{3/2}$ | 9,5 | 9,0 | 9,5 | 10,5 |

Note:

Vickers hardness (HV): Load 196,13 N (20 kg), 15 sec
Rockwell hardness (HRA): Load 588,4 N (60 kg), 30 sec
Bending strength: Test piece 3 x 3 x 12.7 mm 10 mm span, 3-point bending
Fracture toughness: IM method, load 196,13 N (20 kg), 15 sec

Contrast example 1 is a cemented carbide alloy called K10, composed of WC and Co. Contrast example 2 is a TiN-based cermet. Embodiment 1 is composed of NbC (30%), TiC (20%), TiN (5%), WC (15%) and $Mo_2C$ (15%).

Embodiment 2 is the same as embodiment 1 except that 50% of NbC (30%) included in embdiment 2 is replaced with TaC. According to Table 1, the Vickers hardness values of embodiments 1 and 2 exceed $13,73 \times 10^9$ $N/m^2$ (1400 $kg/mm^2$) and the fracture toughness values of embodiments 1 and 2 are 9,5 or more. It is understood that the embodiments 1 and 2 are equal to contrast examples 1 and 2 in hardness and superior to them in fracture toughness. According to other experiments conducted by the inventors, it was already known that a cermet composition had less wear resistance if its Vickers hardness value was less than $13,73 \times 10^9$ $N/m^2$ (1400 $kg/mm^2$) and it had less resistance against chipping if its hardness value exceeded $15,20 \times 10^9$ $N/m^2$ (1550 $kg/mm^2$). Thus the ideal Vickers hardness range should be between

$13,73 \times 10^9$ and $15,20 \times 10^9$ N/m$^2$ (1400 and 1550 kg/mm$^2$). In addition, it was already known that resistance against chipping was apt to drop if the fracture toughness of the cermet composition was less than 9,0. However, the hardness and fracture toughness of the cermet composition of the present invention are not strictly restricted by these ranges.

Although contrast example 1 made of a cemented carbide alloy is high in hardness and fracture toughness, it wears when used to mill steel workpieces. This is well known to those people ordinarily skilled in the art. Contrast example 2 has higher hardness and its wear resistance is further improved. However, its resistance against chipping is lower. Therefore, it is impossible to generally judge the suitability of end mills only by their physical properties.

The cutting performance test described below was conducted to clarify the suitability of end mills.

(b) Cutting performance test

Table 2 shows the results of a normal speed milling test and Table 3 shows the results of a high speed milling test using the end mills made of the test pieces listed in Table 1. In the cutting performance test, the cermet which had the same composition as that of embodiment 1 but had a helix angle slightly beyond the range specified by the present invention was tested as experimental example 1, and the cermet which had the same composition as that of embodiment 2 but had a helix angle slightly beyond the range specified by the present invention was tested as experimental example 2. In the same way, the inventors also tested the cermet which had the same composition as that of contrast example 1 but had a helix angle slightly beyond the range specified by the present invention.

Table 2

| Factor / Test piece | Helix angle ($\theta$) | Cutting length (m) | Tool life (Minute) | Condition after cutting |
|---|---|---|---|---|
| Experimental example 1 | 30° | 21.4 | 160 | Breakage |
| Embodiment 1 | 45° | 37.0 | 278 | Wear |
| Experimental example 2 | 30° | 20.6 | 154 | Chipping |
| Embodiment 2 | 45° | 53.0 | 398 | Wear |
| Contrast example 1 | 30° | 3.6 | 27 | Wear |
| | 45° | 37.0 | 278 | Chipping |
| Contrast example 2 | 30° | 0.4 | 3 | Chipping |
| | - | - | - | - |

Note:

End mill dimensions: ⌀6 x 13 mm, with two flutes

Workpiece material: Hot working tool steel having a content of H13 (AISI Standard)

Workpiece hardness: HRC 43

Spindle rotational speed:     1800 rpm

Feed:             133 mm/minute

Depth of cut:     5 x 1 mm

Table 3

| Factor / Test piece | Helix angle (θ) | Cutting length (m) | Tool life (Minute) | Condition after cutting |
|---|---|---|---|---|
| Experimental example 1 | 30° | 14.6 | 49 | Breakage |
| Embodiment 1 | 45° | 29.4 | 99 | Wear |
| Experimental example 2 | 30° | 27.3 | 80 | Chipping |
| Embodiment 2 | 45° | 42.0 | 141 | Wear |
| Contrast example 1 | 30° | 24.0 | 81 | Chipping |
| | 45° | 24.0 | 81 | Chipping |
| Contrast example 2 | 30° | 1.1 | 4 | Chipping |
| | - | - | - | - |

Note:

End mill dimensions: ⌀6 x 13 mm, with two flutes

Workpiece material:  Hot working tool steel having a content of H13 (AISI Standard)

Workpiece hardness:  HRC 43

Spindle rotational speed:        4000 rpm

Feed:                    296 mm/minute

Depth of cut:        5 x 1 mm

(c) Observation

(1) According to the milling test at the normal speed (Table 2), experimental examples 1 and 2 caused breakage and chipping respectively, thus they were found to be improper. Embodiments 1 and 2 were found to be applicable to practical use since they caused only wear. In addition, embodiments 1 and 2 were superior both in cutting length (37 to 53 m) and tool life (278 to approximately 400 minutes). In particular, the cutting length and tool life of embodiment 2 are approximately more than twice those of experimental example 1.

(2) Even though contrast example 1 having an angle of torsion of $\theta$ = 30 degrees can be used for cutting, it is obvious that its cutting length and tool life are one digit too fewer than those of embodiments 1 and 2. Contrast example 1 having $\theta$ = 45 degrees caused chipping. Contrast example 2 also caused chipping. The cutting length and time of contrast example 2 are very small.

(3) In the milling test at the high speed (Table 3) the results similar to those shown in Table 2 were obtained. It is known that embodiments 1 and 2 are far more superior to contrast examples 1 and 2. In particular, embodiment 2 is found to be the best. Contrast 1 having $\theta$ = 30 degrees is durable but is far behind embodiments 1 and 2 in cutting length and tool life in the same manner as shown in Table 2. Contrast example 1 having $\theta$ = 45 degrees and contrast example 2 caused chipping.

(4) Additional test of the cermet composition of embodiment 2:

Fig. 3 shows how the cutting length (m) of the cermet composition of embodiment 2 changes as its helix angle varies. Note that only the helix angle of $\theta$ = 45 degrees conforms to the range of the present invention. The test was conducted under the following conditions.

Test 1

| End mill dimensions: | ⌀6 x 13 mm, with two flutes |
| Workpiece material: | Hot working tool steel having a content of H13 (AISI Standard) |
| Workpiece hardness: | HRC 43 |
| Spindle rotational speed: | 4000 rpm |
| Feed: | 296 mm/minute |
| Depth of cut: | 5 x 1 mm |

Test 2

| End mill dimensions: | ⌀6 x 13 mm, 2 flutes |
| Workpiece material: | Prehardened steel |
| Workpiece hardness: | HRC40 |
| Spindle rotational speed: | 2650 rpm |
| Feed: | 265 mm/minute |
| Depth of cut: | 9 x 2 mm |

In the graph the ordinate and abscissa are commonly used for convenience.

(5) Consideration:

As shown in Fig. 3, the cermet end mill having $\theta$ = 45 degrees achieved the longest cutting length at high speed and normal speed. This indicates that the cermet end mill is superior in cutting performance.

As understood by reference to the above descriptions, the cermet solid end mill having a helix angle of 45 to 50 degrees and the NbC-TiC-TiN-based composition is used in the present invention so that these two technical factors mutually potentiate. As a result, the cutting characteristics, i.e., cutting length, tool life and durability of the cermet solid end mill of the present invention are far more superior to those of the conventional end mills. Therefore, the cermet solid end mill of the present invention can greatly improve the performance and increase the application range of the end mill of the prior invention.

## Claims

1. A solid end mill made of cermet material, comprising TiC, TiN, NbC, WC and a bonding phase of ferrous group metals,

   characterized in that the helix angle ($\theta$) of a cutting edge (2) with respect to the axis of a tool is in the range of 40° to 50°,

   and in that the cermet material is composed essentially of a 10 to 50 % by weight NbC - 10 to 40 % by weight TiC - 5 to 10 % by weight TiN - based cermet composition of matter, which has a WC content of 10 to 25 % by weight.

2. The solid end mill according to claim 1,

   characterized in that the helix angle ($\theta$) is 45° ± 2° and in that the cermet composition includes a NbC-TiC-TiN-WC-$Mo_2$C-based hard material phase and a metal phase comprising Ni or Co or an alloy of Ni and Co.

3. The solid end mill according to claim 1 or 2,

   characterized in that the cermet composition comprises 5 to 20 % by weight $Mo_2$C as a hard material phase.

4. The solid end mill according to any of claims 1 to 3,

   characterized in that the cermet composition is composed essentially of a hard material phase of 50 % by weight NbC, 10 % by weight TiC, 5 % by weight TiN, 10 % by weight WC and 5 % by weight $Mo_2$C.

5. The solid end mill according to any of claims 1 to 3,

   characterized in that the cermet composition is composed essentially of a hard material phase of 30 % by weight NbC, 20 % by weight TiC, 5 % by weight TiN, 15 % by weight WC and 15 % by weight $Mo_2$C.

6. The solid end mill according to any of claims 1 to 5,

   characterized in that a part of NbC is replaced by TaC.

7. The solid end mill according to claim 6,

   characterized in that half of the amount of NbC is replaced by TaC.

8. The solid end mill according to any of claims 1 to 7,

   characterized in that a circular land section (21) is provided at the end of the end mill in order to increase the cutting angle ($\theta$1).

9. The solid end mill according to claim 8,

   characterized in that the cutting angle ($\theta$1) is approximately 90°.

## Revendications

1. Fraise en bout monobloc en matériau cermet comprenant du TiC, TiN, NbC, WC ainsi qu'une phase de liant du groupe des métaux ferreux, caractérisée en ce que l'angle d'hélice ($\theta$) d'une arête coupante (2), formé par celle-ci avec l'axe de l'outil, est compris entre 40° et 50°, et en ce que le matériau cermet est composé essentiellement d'un mélange de matière cermet à base de 10 à 50 % en poids

EP 0 213 334 B1

de NbC - de 10 à 40 % en poids de TiC - et de 5 à 10 % en poids de TiN, qui a une teneur en WC de 10 à 25 % en poids.

**2.** Fraise en bout monobloc selon la revendication 1, caractérisée en ce que l'angle d'hélice ($\theta$) est 45° ± 2°, et en ce que la composition du matériau cermet comporte une phase de matière dure basée sur un mélange de NbC-TiC-TiN-WC-Mo$_2$C et une phase de métal comprenant du Ni ou du Co ou un alliage de Ni et de Co.

**3.** Fraise en bout monobloc selon la revendication 1 ou 2, caractérisée en ce que la composition du matériau cermet comporte une phase de matière dure contenant 5 à 20 % en poids de Mo$_2$C.

**4.** Fraise en bout monobloc selon l'une quelconque des revendications 1 à 3, caractérisée en ce que la composition du matériau cermet comporte essentiellement une phase de matière dure composée de 50 % en poids de NbC, de 10 % en poids de TiC, de 5 % en poids de TiN, de 10 % en poids de WC et de 5 % en poids de Mo$_2$C.

**5.** Fraise en bout monobloc selon l'une quelconque des revendications 1 à 3, caractérisée en ce que la composition du matériau cermet comporte essentiellement une phase de matière dure composée de 30 % en poids de NbC, de 20 % en poids de TiC, de 5 % en poids de TiN, de 15 % en poids de WC et de 15 % en poids de Mo$_2$C.

**6.** Fraise en bout monobloc selon l'une quelconque des revendications 1 à 5, caractérisée en ce que le NbC est remplacé partiellement par du TaC.

**7.** Fraise en bout monobloc selon la revendication 6, caractérisée en ce que la moitié de la quantité de NbC est remplacée par du TaC.

**8.** Fraise en bout monobloc selon l'une quelconque des revendications 1 à 7, caractérisée en ce qu'une partie arrondie pleine (21) est agencée à l'extrémité de la fraise en bout, afin d'augmenter l'angle de taillant ($\theta$1).

**9.** Fraise en bout monobloc selon la revendication 8, caractérisée en ce que l'angle de taillant ($\theta$1) est approximativement de 90°.

**Patentansprüche**

**1.** Vollschaftfräser aus Cermet-Material, enthaltend TiC, TiN, NbC, WC und eine Bindephase aus Metallen der Eisengruppe,
dadurch gekennzeichnet,
daß der Schrägungswinkel ($\theta$) einer Schneidkante (2), bezogen auf die Achse eines Werkzeuges, in dem Bereich von 40° bis 50° liegt,
und daß das Cermet-Material im wesentlichen aus einer Cermet-Materialzusammensetzung auf der Basis von 10 bis 50 Gew.-% NbC - 10 bis 40 Gew.-% TiC - 5 bis 10 Gew.-% TiN besteht, die einen WC-Gehalt von 10 bis 25 Gew.-% hat.

**2.** Vollschaftfräser nach Anspruch 1,
dadurch gekennzeichnet,
daß der Schrägungswinkel ($\theta$) 45° ± 2° beträgt und daß die Cermet-Zusammensetzung eine Hartmaterialphase auf der Basis von NbC-TiC-TiN-WC-Mo$_2$C sowie eine Metallphase enthält, die Ni oder Co oder eine Legierung von Ni und Co aufweist.

**3.** Vollschaftfräser nach Anspruch 1 oder 2,
dadurch gekennzeichnet,
daß die Cermet-Zusammensetzung 5 bis 20 Gew.-% Mo$_2$C als Hartmaterialphase aufweist.

**4.** Vollschaftfräser nach einem der Ansprüche 1 bis 3,
dadurch gekennzeichnet,
daß die Cermet-Zusammensetzung im wesentlichen aus einer Hartmaterialphase aus 50 Gew.-% NbC,

9

10 Gew.-% TiC, 5 Gew.-% TiN, 10 Gew.-% WC und 5 Gew.-% Mo$_2$C besteht.

**5.** Vollschaftfräser nach einem der Ansprüche 1 bis 3,
dadurch gekennzeichnet,
daß die Cermet-Zusammensetzung im wesentlichen aus einer Hartmaterialphase aus 30 Gew.-% NbC, 20 Gew.-% TiC, 5 Gew.-% TiN, 15 Gew.-% WC und 15 Gew.-% Mo$_2$C besteht.

**6.** Vollschaftfräser nach einem der Ansprüche 1 bis 5,
dadurch gekennzeichnet,
daß ein Teil des NbC durch TaC ersetzt ist.

**7.** Vollschaftfräser nach Anspruch 6,
dadurch gekennzeichnet,
daß die Hälfte der Menge von NbC durch TaC ersetzt ist.

**8.** Vollschaftfräser nach einem der Ansprüche 1 bis 7,
dadurch gekennzeichnet,
daß ein kreisförmiger Flächenbereich (21) am Ende des Schaftfräsers vorgesehen ist, um den Schneidwinkel ($\theta$1) zu vergrößern.

**9.** Vollschaftfräser nach Anspruch 8,
dadurch gekennzeichnet,
daß der Schneidwinkel ($\theta$1) ungefähr 90° beträgt.

F I G. 1

F I G. 2

F I G. 3